# EUROPÄISCHE PATENTSCHRIFT

(11) **EP 1 164 751 B1**
(45) Veröffentlichungstag und Bekanntmachung des Hinweises auf die Patenterteilung: **11.10.2006**
(21) Anmeldenummer: 01114239.5
(22) Anmeldetag: 12.06.2001
(51) Int. Cl.: H04L 12/40, H04L 1/16

(54) **Verfahren zum schnellen und fehlerfreien Übertragen von Daten auf einem Bus**
Method of fast and error free transmission of data on a bus
Procédé de transmission de données rapide et sans erreurs par bus

(30) Priorität: 16.06.2000 DE 10029834
(43) Veröffentlichungstag der Anmeldung: 19.12.2001
(73) Patentinhaber: Infineon Technologies AG, 81669 München (DE)
(72) Erfinder: Barrenscheen, Jens, Dr., 81669 München (DE); Von Wendorff, Wilhard, Dr., 81241 München (DE)
(74) Vertreter: Jannig, Peter

(56) Entgegenhaltungen:
- EP-A- 0 319 271
- EP-A- 0 395 495
- DE-A- 19 620 137
- DE-A- 19 721 740
- US-A- 4 896 151
- US-A- 5 293 571

## Beschreibung

Die vorliegende Erfindung betrifft ein Verfahren gemäß den Oberbegriffen der Patentansprüche 1 und 2 und eine Vorrichtung gemäß den Oberbegriffen der Patentansprüche 23 und 24.

Solche Verfahren und Einrichtungen sind bekannt und bedürfen keiner näheren Erläuterung.

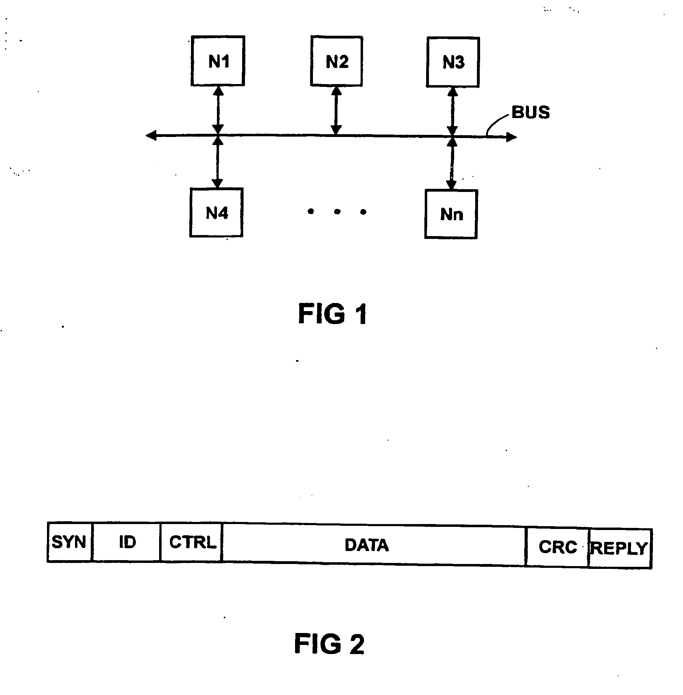

Ein möglicher Aufbau eines Systems, bei welchen mehrere Einrichtungen über einen Bus verbunden sind, ist schematisch in Figur 1 dargestellt. Dabei sind die zu verbindenden Einrichtungen mit den Bezugszeichen N1, N2, ... Nn, und der diese Einrichtungen verbindende Bus mit dem Bezugszeichen BUS bezeichnet.

Bei dem in der Figur 1 gezeigten System kann prinzipiell jede der Einrichtungen N1, N2, ... Nn an eine beliebige andere Einrichtung über den Bus BUS Daten übertragen.

Ein bekanntes Problem bei Datenübertragungen zwischen über einen Bus miteinander verbundenen Einrichtungen besteht darin, daß die Datenübertragung sehr schnell und effizient erfolgen soll, daß aber andererseits auch sichergestellt werden muß, daß die zu übertragenden Daten fehlerfrei ankommen.

Bislang ist es noch nicht gelungen, dieses Problem zur völligen Zufriedenheit zu lösen: entweder die Datenübertragung erfolgt sehr schnell und ist dafür nicht unter allen Umständen sicher, oder die Datenübertragung ist sehr sicher und erfolgt dafür nicht so schnell.

Aus der US 5,293,571 sind Verfahren gemäß den Oberbegriffen der Patentansprüche 1 und 2 und Vorichtungen gemäß den Oberbegriffen der Patentansprüche 23 und 24 bekannt. Auch durch diese Verfahren und Vorrichtungen läßt sich das vorstehend erwähnte Problem nicht zur vollen Zufriedenheit lösen.

Der vorliegenden Erfindung liegt daher die Aufgabe zugrunde, das Verfahren gemäß dem Oberbegriff der Patentansprüche 1 und 2 und die Einrichtungen gemäß den Oberbegriffen der Patentansprüche 23 und 24 derart weiterzubilden, daß diese eine Datenübertragung ermöglichen, die einerseits sehr schnell und effizient ist, und bei welcher andererseits sichergestellt werden kann, daß die zu übertragenden Daten fehlerfrei ankommen.

Diese Aufgabe wird erfindungsgemäß durch die in den Patentansprüchen 1 und 2 beanspruchten Verfahren und die in den Patentansprüchen 23 und 24 beanspruchten Einrichtungen gelöst.

Solche Verfahren und Einrichtungen erweisen sich in vielfacher Hinsicht als vorteilhaft:
- einerseits, weil aufgrund der individuellen Einstellbarkeit der am Bus angeschlossenen Einrichtungen unter allen Umständen zuverlässige Informationen darüber erhalten können werden, ob die Einrichtungen, für die die zu übertragenden Daten bestimmt sind, die Daten fehlerfrei erhalten haben oder nicht,
- andererseits, weil diese Informationen unmittelbar nach der Übertragung der Daten, also beispielsweise noch in dem Frame bzw. in der Nachricht, in welchem bzw. welcher die zu übertragenden Daten übertragen werden, erhalten werden können,
- andererseits, weil diese Informationen bei Bedarf auch erst später , also beispielsweise in einem Frame bzw. in einer Nachricht, in welchem bzw. welcher andere Daten übertragen werden, erhalten werden können,
- ferner, weil keine Notwendigkeit besteht, die Informationen in einem oder mehreren eigenen Frames oder Nachrichten anzufordern und/oder zu übertragen, oder - wie etwa bei der Anzeige von Übertragungsfehlern beim CAN-Bus - Ausnahmesituationen zu schaffen, die auf bestimmte Zustände oder Ereignisse hindeuten,
- ferner, weil die die Informationen repräsentierenden Daten aufgrund der individuellen Einstellbarkeit der am Bus angeschlossenen Einrichtungen ohne Zusatzinformationen wie etwa der Angabe des Empfängers, des Absenders und/oder der Bedeutung der Daten versandt werden können, und
- schließlich, weil die die Informationen repräsentierenden Daten aufgrund der individuellen Einstellbarkeit der am Bus angeschlossenen Einrichtungen von diesen völlig selbständig, d.h. ohne einen Anstoß oder eine Autorisierung durch eine die Busvergabe steuernde Einrichtung (ohne Arbitrierung) ausgegeben werden können.

Durch die beanspruchten Verfahren und die beanspruchten Einrichtungen läßt sich die Übertragung von Daten somit auf verblüffend einfache Weise zugleich äußerst schnell, effizient und sicher bewerkstelligen.

Auf die selbe Art und Weise, und genauso einfach, schnell, effizient und zuverlässig können auch beliebige andere Informationen von den am Bus angeschlossenen Einrichtungen erhalten werden.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: den prinzipiellen Aufbau eines Systems mit über einen Bus verbundenen Einrichtungen, und
- Figur 2: ein Ausführungsbeispiel des Formates einer Nachricht oder eines Frames, unter Verwendung dessen beim nachfolgend beschriebenen Verfahren und bei der nachfolgend beschriebenen Einrichtung Daten übertragen werden.

Das im folgenden beschriebene Verfahren dient zur Übertragung von Daten zwischen über einen Bus verbundenen Einrichtungen; die im folgenden beschriebene Einrichtung ist eine zur Durchführung des Verfahrens geeignete Einrichtung. Ein möglicher Aufbau des Systems, bei welchem das Verfahren und die Einrichtung zum Einsatz kommen kann, ist in der eingangs bereits beschriebenen Figur 1 dargestellt. Es sei jedoch bereits an dieser Stelle darauf hingewiesen, daß auf den in der Figur 1 gezeigten Aufbau keine Einschränkung besteht. Das System kann auch beliebig anders aufgebaut sein.

Unter "Bus" möge eine nicht verbindungsorientierte Kommunikationsverbindung verstanden werden, über welche zwischen an den Bus angeschlossenen Einrichtungen optisch, elektrisch oder auf sonstige Art und Weise Daten ausgetauscht werden können.

Im betrachteten Beispiel kann jede der an den Bus BUS angeschlossenen Einrichtungen N1, N2, ... Nn Bus-Master werden; es handelt sich also um ein sogenanntes Multi-Master-Bussystem. Auch hierauf besteht jedoch keine Einschränkung. Der Einsatz des nachfolgend beschriebenen Verfahrens erweist sich auch als vorteilhaft, wenn nur eine einzige Einrichtung oder nur einige wenige der vorhandenen Einrichtungen Bus-Master werden können.

Vorliegend bestimmen die an den Bus BUS angeschlossenen Einrichtungen N1, N2, ... Nn selbst, wer Bus-Master ist. Dies geschieht wie beim CAN-Bus unter Berücksichtigung der über den Bus übertragenen Daten; solange eine jeweilige Einrichtung die von ihr ausgegebenen Daten auf dem Bus wiederfindet, kann sie sich als Bus-Master fühlen. Der Einsatz des nachfolgend beschriebenen Verfahrens erweist sich jedoch auch bei Systemen als vorteilhaft, bei welchen der Bus-Master anders, beispielsweise durch eine Bus-Steuereinrichtung festgelegt wird.

Der Bus BUS des betrachteten Systems ist standardmäßig mit einem den Pegel 0 repräsentierenden Potential beaufschlagt, und wird "nur" dann, wenn ein den Pegel 1 aufweisendes Bit über den Bus zu übertragen ist, auf ein anderes Potential gebracht. Weil das den Pegel 0 repräsentierende Potential bei Bedarf auf das den Pegel 1 repräsentierende Potential gezogen werden kann, werden den Pegel 1 aufweisende Bits als dominante Bits, und den Pegel 0 aufweisende Bits als rezessive Bits bezeichnet. Es dürfte einleuchten, daß hierauf keine Einschränkung besteht. Es könnte selbstverständlich auch vorgesehen werden, daß die den Pegel 1 aufweisenden Bits die rezessiven Bits sind, und daß die den Pegel 0 aufweisenden Bits die dominanten Bits sind. Die Vorbelegung des Busses mit einem einen bestimmten Pegel repräsentierenden Potential erfolgt im betrachteten Beispiel unter Verwendung von sogenannten Pull-Down-Widerständen oder Pull-Up-Widerständen, die in den an den Bus angeschlossenen Einrichtungen oder anderswo vorgesehen sein können. Die Vorbelegung des Busses einem einen bestimmten Pegel repräsentierenden Potential erweist sich zwar als vorteilhaft, ist aber keine Voraussetzung für die Anwendbarkeit des vorliegend betrachteten Verfahrens.

Der Bus BUS ist im betrachteten Beispiel für eine bitweise sequentiell erfolgende Übertragung von Daten ausgelegt. Allerdings besteht auch hierauf keine Einschränkung. Der Einsatz des nachfolgend beschriebenen Verfahrens kann sich auch als vorteilhaft erweisen, wenn die Übertragung parallel oder teilweise parallel (beispielsweise byteweise sequentiell) erfolgt.

Das vorliegend betrachtete Verfahren zeichnet sich dadurch aus,
- daß die von einer ersten Einrichtung zu einer oder mehreren zweiten Einrichtungen zu übertragenden Daten zusammen mit für die Übertragung und/oder die Verwendung der Daten benötigten oder nützlichen Informationen in Einheiten übertragen werden, die zumindest teilweise wenigstens einen Bereich umfassen, der einen Zeitschlitz definiert, innerhalb dessen die keine Daten übertragenden Einrichtungen bestimmte Informationen repräsentierende Daten auf den Bus ausgeben können, und daß in den Einrichtungen, die innerhalb des besagten Zeitschlitzes Daten auszugeben haben können, eingestellt wird, unter welchen Voraussetzungen innerhalb des Zeitschlitzes Daten auszugeben sind, und/oder welche Informationen repräsentierende Daten innerhalb des Zeitschlitzes auszugeben sind, und/oder zu welchen Zeitpunkten innerhalb des Zeitschlitzes die Daten auszugeben sind, und/oder
- daß die von einer ersten Einrichtung zu einer oder mehreren zweiten Einrichtungen zu übertragenden Daten zusammen mit für die Übertragung und/oder die Verwendung der Daten benötigten oder nützlichen Informationen in Einheiten übertragen werden, die zumindest teilweise wenigstens einen Bereich umfassen, der einen Zeitschlitz definiert, innerhalb dessen die keine Daten übertragenden Einrichtungen bestimmte Informationen repräsentierende Daten auf den Bus ausgeben können, und daß zumindest in bestimmten Einrichtungen eingestellt wird, welche anderen Einrichtungen innerhalb des Zeitschlitzes Daten auszugeben haben, und/oder welche Informationen repräsentierende Daten innerhalb des Zeitschlitzes von den anderen Einrichtungen auszugeben sind, und/oder zu welchen Zeitpunkten innerhalb des Zeitschlitzes die anderen Einrichtungen die jeweiligen Daten auszugeben haben.

Die vorliegend betrachtete Einrichtung zeichnet sich dadurch aus,
- daß sie so aufgebaut ist, daß die Übertragung der zu übertragenden Daten zusammen mit für die Übertragung und/oder die Verwendung der Daten benötigten oder nützlichen Informationen in Einheiten erfolgen kann, die zumindest teilweise wenigstens einen Bereich umfassen, der einen Zeitschlitz definiert, innerhalb dessen die Einrichtung bestimmte Informationen repräsentierende Daten auf den Bus ausgeben kann, und daß in der Einrichtung eingestellt ist, unter welchen Voraussetzungen sie innerhalb des Zeitschlitzes Daten auszugeben hat, und/oder welche Informationen repräsentierende Daten sie innerhalb des Zeitschlitzes auszugeben hat, und/oder zu welchen Zeitpunkten innerhalb des Zeitschlitzes die Daten auszugeben sind, und/oder
- daß sie so aufgebaut ist, daß die Übertragung der zu übertragenden Daten zusammen mit für die Übertragung und/oder die Verwendung der Daten benötigten oder nützlichen Informationen in Einheiten erfolgen kann, die zumindest teilweise wenigstens einen Bereich umfassen, der einen Zeitschlitz definiert, innerhalb dessen eine oder mehrere andere Einrichtungen bestimmte Informationen repräsentierende Daten auf den Bus ausgeben können, und daß in der Einrichtung eingestellt ist, welche anderen Einrichtungen innerhalb des Zeitschlitzes Daten auszugeben haben, und/oder welche Informationen repräsentierende Daten innerhalb des Zeitschlitzes von den anderen Einrichtungen auszugeben sind, und/oder zu welchen Zeitpunkten innerhalb des Zeitschlitzes die anderen Einrichtungen die jeweiligen Daten auszugeben haben.

Die genannten Einheiten, in welchen die zu übertragenden Daten zusammen mit für die Übertragung und/oder die Verwendung der Daten benötigten oder nützlichen Informationen und/oder weiteren Informationen übertragen werden, sind beispielsweise die von bereits existierenden Bus-Systemen her bekannten Frames oder Nachrichten. Allerdings weisen die Frames oder Nachrichten, die beim vorliegend betrachteten Verfahren zum Einsatz kommen, einen anderen Aufbau als herkömmliche Frames oder Nachrichten auf.

Ein Beispiel für den Aufbau eines Frames bzw. einer Nachricht, der bzw. die beim vorliegend betrachteten Verfahren verwendet wird, ist in Figur 2 dargestellt.

Dieser Frame bzw. diese Nachricht umfaßt ein Synchronisations-Feld SYN, ein Identifier-Feld ID, ein Control-Feld CTRL, ein Daten-Feld DATA, ein Fehlererkennungs-Feld CRC, und ein Reply-Feld REPLY.

Das Synchronisations-Feld SYN, das Identifier-Feld ID, das Control-Feld CTRL, das Daten-Feld DATA, und das Fehlererkennungs-Feld CRC werden von der den Frame bzw. die Nachricht versendenden Einrichtung mit jeweils ein oder mehrere Bits umfassenden Daten belegt und anschließend - sobald die betreffende Einrichtung Bus-Master werden kann - sequentiell bitweise auf den Bus ausgegeben. Von diesen Feldern
- enthält das Synchronisations-Feld SYN ein bestimmtes Bit oder eine bestimmte Bitfolge, durch das bzw. die den anderen Einrichtungen der Beginn eines Frames bzw. einer Nachricht angezeigt wird,
- enthält das Identifier-Feld ID ein oder mehrere Bits, die den Typ, den Inhalt und/oder den Empfänger des betreffenden Frame bzw. der betreffenden Nachricht spezifizieren,
- enthält das Control-Feld CTRL ein oder mehrere Bits, die die Länge des Daten-Feldes angeben,
- enthält das Daten-Feld DATA die Daten oder die Nachricht, die eigentlich zu übertragen ist, und
- enthält das Fehlererkennungs-Feld CRC ein oder mehrere Bits, anhand welcher sich Übertragungsfehler erkennen und/oder korrigieren lassen.

Das Reply-Feld REPLY wird von der den Frame oder die Nachricht versendenden Einrichtung nicht oder allenfalls teilweise mit Daten belegt. Durch dieses Feld wird somit ein Zeitschlitz definiert, in welchem die Einrichtungen, die nicht Bus-Master sind, Daten auf den Bus ausgeben können oder müssen. Je nach der Länge des durch das Reply-Feld definierten Zeitschlitzes können in diesem ein oder mehrere Bits über den Bus übertragen werden.

Die Informationen, die die Daten repräsentieren, welche in dem durch das Reply-Feld definierten Zeitschlitz über den Bus übertragen werden, können die unterschiedlichsten Informationen sein, beispielsweise
- die Meldung einer oder mehrerer der am Bus angeschlossenen Einrichtungen, daß diese den Frame bzw. die Nachricht, dessen bzw. deren Bestandteil das Reply-Feld ist (oder eventuell auch einen vorher übertragenen Frame bzw. eine vorher übertragenen Nachricht oder darin enthaltene Daten) fehlerfrei empfangen hat bzw. haben, und/oder
- die Meldung einer oder mehrerer der am Bus angeschlossenen Einrichtungen, daß diese den Frame bzw. die Nachricht, dessen bzw. deren Bestandteil das Reply-Feld ist (oder eventuell auch einen vorher übertragenen Frame bzw. eine vorher übertragenen Nachricht oder darin enthaltene Daten), nicht fehlerfrei empfangen hat bzw. haben, und/oder
- Informationen einer oder mehrerer der am Bus angeschlossenen Einrichtungen über deren Zustände (beispielsweise über die Betriebsart, in welcher sie sich befinden, die Auslastung, die Temperatur, etc.).

Welche Einrichtung zu welchem Zeitpunkt welche Information auf den Bus auszugeben hat, wird vorzugsweise in den betreffenden Einrichtungen selbst eingestellt. Dadurch können die jeweiligen Einrichtungen selbständig, d.h. ohne Anstoß oder Autorisierung durch eine die Busvergabe steuernde oder eine sonstige Einrichtung, die von ihnen auf den Bus auszugebenden Daten zum richtigen Zeitpunkt auf den Bus ausgeben.

Die entsprechenden Einstellungen in den am Bus angeschlossenen Einrichtungen erfolgen zweckmäßigerweise vor dem Beginn der Übertragung des Frames bzw. der Nachricht, der bzw. die das Reply-Feld enthält, vorzugsweise bereits bei der beispielsweise nach dem Einschalten des Systems erfolgenden Initialisierung desselben. Es erweist sich als vorteilhaft, wenn die Einstellungen während des Betriebes veränderbar sind. Dies könnte beispielsweise durch in entsprechenden Frames bzw. Nachrichten versandte Steuerbefehle bewerkstelligt werden. Die Vornahme der Einstellung durch über den Bus versandte Frames bzw. Nachrichten kann nicht nur bei Veränderungen der Einstellungen, sondern auch bei Neueinstellung der Einrichtungen zum Einsatz kommen.

Die entsprechenden Einstellungen werden vorzugsweise in in den betreffenden Einrichtungen vorgesehenen nicht-flüchtigen Speichern gespeichert. Dann reicht es unter Umständen aus, wenn die Einstellungen nur bei der ersten Inbetriebnahme des Systems erfolgen. Darüber hinaus wäre es dann auch problemlos (jedenfalls ohne wiederholte Einstellungen der betreffenden Einrichtungen) möglich, daß die Einrichtungen während des Betriebes des Systems zwischenzeitlich in eine Energiespar-Betriebsart (beispielsweise eine sogenannte Sleep-Betriebsart oder eine sogenannte Power-Down-Betriebsart) gehen.

Welche Einrichtung zu welchem Zeitpunkt welche Information auf den Bus auszugeben hat, kann auch fest (beispielsweise durch eine entsprechende hardwaremäßige Realisierung der betreffenden Einrichtungen oder unter Verwendung von Jumpern) in den Einrichtungen eingestellt werden.

Die Einstellungen können einheitlich (für alle Einrichtungen gleich) oder individuell (unterschiedlich) erfolgen.

Die Einstellungen erfolgen im betrachteten Beispiel so, daß es vom Inhalt des aktuellen oder eines bestimmten vorhergehenden Frame bzw. vom Inhalt der aktuellen oder einer bestimmten vorhergehenden Nachricht, insbesondere von den darin spezifizierten Empfängern des Frame bzw. der Nachricht, abhängig gemacht wird, welche Einrichtung zu welchem Zeitpunkt welche Information auf den Bus auszugeben hat. Es erfolgt also eine frame- oder nachrichtenspezifische Verwendung des Reply-Feldes.

Die Länge des Reply-Feldes (die Länge des dadurch definierten Zeitschlitzes) ist keinen Beschränkungen unterworfen und vorzugsweise variabel; es ist zweckmäßigerweise jeweils genau so lang, wie es notwendig ist, um die zu diesem Zeitpunkt benötigten oder gewünschten Informationen über den Bus übertragen zu können.

Die Daten, die die einzelnen Einrichtungen innerhalb des durch das Reply-Feld definierten Zeitschlitzes auf den Bus geben, können von beliebigen anderen Einrichtungen, also nicht nur von der Einrichtung, die den betreffenden Frame bzw. die betreffende Nachricht versendet, benötigt und ausgewertet werden. Bei einem wie in Figur 1 oder ähnlich aufgebauten System können ja stets alle Einrichtungen mitverfolgen, ob und gegebenenfalls welche Daten über den Bus übertragen werden.

Durch das Reply-Feld und die Möglichkeit der Festlegung, wann welche Einrichtung (en) welche Informationen auf den Bus ausgeben sollen, können die an den Bus angeschlossenen Einrichtungen mit minimalem Aufwand maximal schnell an die Informationen gelangen, die für einen ordnungsgemäßen Betrieb des Systems erforderlich sind. Mit minimalem Aufwand und maximal schnell deshalb,
- weil es nicht erforderlich ist, daß die im Reply-Feld auf den Bus gegebenen Informationen in einem eigenen Frame oder einer eigenen Nachricht angefordert und/oder an die diese Informationen benötigenden Einrichtungen versandt werden müssen,
- weil durch die Auswählbarkeit der Einrichtungen, die antworten sollen, jeweils nur diejenigen Einrichtungen Informationen ausgeben, von welchen Informationen benötigt werden,
- weil durch die Auswählbarkeit der Informationen, die die ausgewählten Einrichtungen in dem durch das Reply-Feld definierten Zeitschlitz auf den Bus geben sollen, nur die Informationen übermittelt werden, die tatsächlich benötigt werden, und
- weil durch die Auswählbarkeit der Zeitpunkte innerhalb des durch das Reply-Feld definierten Zeitschlitzes, zu welchen die ausgewählten Einrichtungen die ausgewählten Informationen auf den Bus geben, zweifelsfrei feststellbar ist, um welche Information es sich jeweils handelt, und welche Information von welcher Einrichtung bzw. von welcher Gruppe von Einrichtungen stammt.

Einige der Vorteile, die durch ein derartiges Datenübertragungs-Verfahren und durch derartige Einrichtungen erzielbar sind, werden nachfolgend anhand einiger ausgewählter Beispiele erläutert.

Zunächst sei angenommen, daß die den Frame bzw. die Nachricht versendende Einrichtung eine Information darüber benötigt, ob der betreffende Frame bzw. die betreffende Nachricht fehlerfrei beim Empfänger eingetroffen ist. Dies läßt sich dadurch bewerkstelligen,
- daß die Einrichtung, für welche der betreffende Frame bzw. die betreffende Nachricht bestimmt ist, so eingestellt wird, daß sie innerhalb des durch das Reply-Feld definierten Zeitschlitzes oder zu einem bestimmten Zeitpunkt innerhalb des durch das Reply-Feld definierten Zeitschlitzes ein im betrachteten Beispiel durch ein dominantes Bit gebildetes positives Acknowledge-Bit auf den Bus ausgibt, wenn sie den Frame oder die Nachricht bis dahin fehlerfrei empfangen hat, und kein positives Acknowledge-Bit (kein dominantes Bit) ausgibt, wenn das Gegenteil der Fall ist, und
- daß die Einrichtungen, für welche der betreffende Frame bzw. die betreffende Nachricht nicht bestimmt ist, so eingestellt sind, daß diese zumindest zu dem Zeitpunkt, zu dem die Einrichtung, für welche der betreffende Frame bzw. die betreffende Nachricht bestimmt ist, den fehlerfreien Empfang des Frames oder der Nachricht durch die Ausgabe eines positiven Acknowledge-Bits zu quittieren haben kann, keine Daten auf den Bus ausgeben, auch keine Information darüber, ob sie den Frame oder die Nachricht bis dahin fehlerfrei empfangen haben oder nicht.

Dadurch erhält die den betreffenden Frame bzw. die betreffende Nachricht versendende Einrichtung eine eindeutige Rückmeldung darüber, ob der Frame bzw. die Nachricht fehlerfrei bei der Einrichtung, für die er bestimmt ist, angekommen ist. Somit kann es, anders als etwa beim CAN-Bus, nicht dazu kommen, daß der Frame oder die Nachricht erneut versandt wird, obgleich der Empfänger, für den der betreffende Frame bzw. die betreffende Nachricht bestimmt ist, diesen bzw. diese fehlerfrei erhalten hat.

Wenn der betreffende Frame bzw. die betreffende Nachricht für mehrere Empfänger bestimmt ist, kann vorgesehen werden,
- daß die Einrichtungen, für welche der betreffende Frame bzw. die betreffende Nachricht bestimmt ist, so eingestellt werden, daß sie zu voneinander verschiedenen Zeitpunkten innerhalb des durch das Reply-Feld definierten Zeitschlitzes ein positives Acknowledge-Bit auf den Bus ausgeben, wenn sie den Frame oder die Nachricht bis dahin fehlerfrei empfangen haben, und kein positives Acknowledge-Bit ausgeben, wenn das Gegenteil der Fall ist, und
- daß die Einrichtungen, für welche der betreffende Frame bzw. die betreffende Nachricht nicht bestimmt ist, so eingestellt werden, daß diese zumindest zu den Zeitpunkten, zu denen die Einrichtungen, für welche der betreffende Frame bzw. die betreffende Nachricht bestimmt ist, den fehlerfreien Empfang des Frames oder der Nachricht durch die Ausgabe eines positives Acknowledge-Bits zu quittieren haben können, keine Daten auf den Bus ausgeben, auch keine Information darüber, ob sie den Frame bzw. die Nachricht bis dahin fehlerfrei empfangen haben oder nicht.

Dadurch erhält die den betreffenden Frame bzw. die betreffende Nachricht versendende Einrichtung eine eindeutige Rückmeldung darüber, ob der Frame bzw. die Nachricht fehlerfrei bei jeder einzelnen Einrichtung, für die er bestimmt ist, angekommen ist. Das selbe Ergebnis läßt sich erzielen,
- wenn die Einrichtungen, für welche der betreffende Frame bzw. die betreffende Nachricht bestimmt ist, so eingestellt werden, daß sie innerhalb des durch das Reply-Feldes definierten Zeitschlitzes oder zu einem bestimmten Zeitpunkt innerhalb des durch das Reply-Feld definierten Zeitschlitzes ein im betrachteten Beispiel durch ein dominantes Bit gebildetes negatives Acknowledge-Bit auf den Bus ausgeben, wenn sie den Frame oder die Nachricht bis dahin nicht fehlerfrei empfangen haben, und kein negatives Acknowledge-Bit (kein dominantes Bit) ausgeben, wenn das Gegenteil der Fall ist, und
- daß die Einrichtungen, für welche der betreffende Frame bzw. die betreffende Nachricht nicht bestimmt ist, so eingestellt sind, daß diese zumindest zu dem Zeitpunkt, zu denen die Einrichtungen, für welche der betreffende Frame bzw. die betreffende Nachricht bestimmt ist, den nicht fehlerfreien Empfang des Frames oder der Nachricht durch die Ausgabe eines negatives Acknowledge-Bits zu melden haben können, keine Daten auf den Bus ausgeben, auch keine Information darüber, ob sie den Frame oder die Nachricht bis dahin fehlerfrei empfangen haben oder nicht.

Auch hierdurch erhält die den betreffenden Frame bzw. die betreffende Nachricht versendende Einrichtung eine eindeutige Rückmeldung darüber, ob der Frame bzw. die Nachricht bei allen Einrichtungen, für welche der betreffende Frame bzw. die betreffende Nachricht bestimmt ist, fehlerfrei angekommen ist. Zwar läßt sich hier, wenn ein Übertragungsfehler aufgetreten ist, nicht feststellen, welche der Einrichtungen den Frame bzw. die Nachricht nicht fehlerfrei erhalten hat, doch spielt dies im allgemeinen keine Rolle, denn der Frame bzw. die Nachricht muß ja ohnehin erneut übertragen werden.

In Fällen, in denen es erforderlich ist, daß bestimmte oder alle Einrichtungen, für die der betreffende Frame bzw. die betreffende Nachricht bestimmt ist, synchron (gleichzeitig oder in bestimmten zeitlichen Abständen) mit der Weiterverarbeitung der darin enthaltenen Daten beginnen, kann vorgesehen werden, daß nicht nur die den Frame bzw. die Nachricht versendende Einrichtung, sondern auch die Einrichtungen, für die der betreffende Frame bzw. die betreffende Nachricht bestimmt ist, die im Reply-Feld über den Bus übertragenen Daten überwachen, und daß mit der Weiterverarbeitung der im betreffenden Frame bzw. in der betreffenden Nachricht enthaltenen Daten erst begonnen wird, wenn aus dem im Reply-Feld über den Bus übertragenen Daten hervorgeht, daß die synchron zu betreibenden Einrichtungen den Frame bzw. die Nachricht fehlerfrei erhalten haben.

Es kann sich auch als vorteilhaft erweisen, wenn zusätzlich zumindest bestimmte Einrichtungen, für die der jeweilige Frame bzw. die jeweilige Nachricht nicht bestimmt ist, innerhalb des Reply-Feldes den fehlerfreien Empfang des Frame bzw. der Nachricht quittieren oder einen fehlerhaften Empfang zurückmelden. Diese Rückmeldungen erfolgen jedoch vorzugsweise zu einem anderen Zeitpunkt innerhalb des durch das Reply-Feld definierten Zeitschlitzes als die entsprechenden Rückmeldungen durch die Einrichtungen, für die der betreffende Frame bzw. die betreffende Nachricht bestimmt ist. Wenn eine oder mehrere der Einrichtungen, für die der jeweilige Frame bzw. die jeweilige Nachricht nicht bestimmt ist, einen fehlerhaften Empfang melden, hat dies zwar keinen Einfluß auf die Übertragung des aktuellen Frames bzw. der betreffenden Nachricht, doch läßt es insbesondere bei häufigerem Auftreten Rückschlüsse auf die Übertragungssicherheit im System zu und kann zum Anlaß genommen werden, Wartungs- oder Reparaturarbeiten durchzuführen oder Änderungen im Systemaufbau oder in den Systemkomponenten vorzunehmen.

Es kann sich auch als vorteilhaft erweisen, wenn einzelne, mehrere oder alle am Bus angeschlossenen Einrichtungen so eingestellt werden, daß sie zu voneinander verschiedenen Zeitpunkten innerhalb des durch das Reply-Feld definierten Zeitschlitzes ein dominantes Bit auf den Bus ausgeben, wenn sie den Frame oder die Nachricht bis dahin fehlerfrei empfangen haben, und - jeweils zu voneinander verschiedenen anderen Zeitpunkten innerhalb des durch das Reply-Feld definierten Zeitschlitzes - ein dominantes Bit ausgeben, wenn das Gegenteil der Fall ist. Dies eröffnet die Möglichkeit, zu kontrollieren, ob die betreffenden Einrichtungen noch ordnungsgemäß arbeiten oder etwa - aus welchem Grund auch immer - ausgefallen sind. Man kann davon ausgehen, daß die einzelnen Einrichtungen noch ordnungsgemäß arbeiten, wenn sie entweder einen fehlerfreien Empfang oder einen fehlerhaften Empfang melden; melden eine der Einrichtungen weder einen fehlerfreien Empfang noch einen Empfangsfehler, oder sowohl einen fehlerfreien Empfang als auch einen Empfangsfehler, so ist dies ein Zeichen dafür, daß die betreffende Einrichtung nicht mehr ordnungsgemäß arbeitet.

Es dürfte einleuchten, daß einzelne, mehrere oder alle am Bus angeschlossenen Einrichtungen einschließlich der einen Frame bzw. eine Nachricht versendenden Einrichtung während des durch das Reply-Feld definierten Zeitschlitzes (zu bestimmten Zeitpunkten innerhalb desselben) auch beliebige andere Informationen auf den Bus geben können. Eine solche Information ist beispielsweise eine Information über die Betriebsart (Normal-Betriebsart, Energiespar-Betriebsart etc.), in welcher sich die betreffende Einrichtung gerade befindet, oder eine sonstige Information, die für eine oder mehrere andere Einrichtungen von Interesse sein könnte.

Insbesondere wenn die über den Bus zu transferierenden Daten mit einer sehr hoher Taktfrequenz übertragen werden, kann vorgesehen werden, daß den Einrichtungen ein größerer Zeitraum zur Verfügung gestellt wird, innerhalb dessen sie die auf den Bus zu gebenden Informationen auf den Bus geben können, daß also den Einrichtungen beispielsweise ein Zeitraum, in dem zwei oder mehr Bits über den Bus übertragen werden können, zur Verfügung gestellt wird, um ein Bit auf den Bus auszugeben. Dadurch können Fehler vermieden werden, die daraus resultieren, daß es einer Einrichtung auf Grund von Problemen bei der Synchronisierung mit dem gemeinsamen Übertragungs-Takt nicht gelingt, die auf den Bus auszugebende Informationen innerhalb einer dafür reservierten Taktperiode auf den Bus zu geben.

Aus den vorstehenden Erläuterungen wird ersichtlich, daß es durch das beschriebene Verfahren zum Übertragen von Daten zwischen über einen Bus verbundenen Einrichtungen möglich ist, zu übertragende Daten schnell, mit höchster Effizienz und dennoch absolut sicher zu übertragen.

Es dürfte einleuchten, daß die Frames oder Nachrichten dabei auch einen anderen Aufbau als in Figur 2 dargestellt aufweisen können. Sie können insbesondere mehr, weniger und/oder andere Inhalte repräsentierende Felder aufweisen.

### Bezugszeichenliste

- BUS: Bus
- CRC: Fehlererkennungs-Feld
- CTRL: Control-Feld
- DATA: Daten-Feld
- ID: Identifier-Feld
- Nx: an BUS angeschlossene Einrichtungen
- REPLY: Reply-Feld
- SYN: Synchronisations-Feld

## Patentansprüche

1. Verfahren zum Übertragen von Daten zwischen über einen Bus (BUS) verbundenen Einrichtungen (N1-Nn), wobei die von einer ersten Einrichtung zu einer oder mehreren zweiten Einrichtungen zu übertragenden Daten zusammen mit für die Übertragung und/oder die Verwendung der Daten benötigten oder nützlichen Informationen in Einheiten übertragen werden, die zumindest teilweise wenigstens einen Bereich (REPLY) umfassen, der einen Zeitschlitz definiert, innerhalb dessen die keine Daten übertragenden Einrichtungen bestimmte Informationen repräsentierende Daten auf den Bus ausgeben können, und wobei in den Einrichtungen, die innerhalb des besagten Zeitschlitzes Daten auszugeben haben können, eingestellt wird, unter welchen Voraussetzungen innerhalb des Zeitschlitzes Daten auszugeben sind, und/oder welche Informationen repräsentierende Daten innerhalb des Zeitschlitzes auszugeben sind, und/oder zu welchen Zeitpunkten innerhalb des Zeitschlitzes die Daten auszugeben sind,
**dadurch gekennzeichnet,**
**daß** die den Zeitschlitz betreffenden Einstellungen durch zu den betreffenden Einrichtungen (N1-Nn) über den Bus (BUS) übertragene Daten und/oder Anweisungen erfolgt.

2. Verfahren zum Übertragen von Daten zwischen über einen Bus (BUS) verbundenen Einrichtungen (N1-Nn),wobei die von einer ersten Einrichtung zu einer oder mehreren zweiten Einrichtungen zu übertragenden Daten zusammen mit für die Übertragung und/oder die Verwendung der Daten benötigten oder nützlichen Informationen in Einheiten übertragen werden, die zumindest teilweise wenigstens einen Bereich (REPLY) umfassen, der einen Zeitschlitz definiert, innerhalb dessen die keine Daten übertragenden Einrichtungen bestimmte Informationen repräsentierende Daten auf den Bus ausgeben können, und wobei zumindest in bestimmten Einrichtungen eingestellt wird, welche anderen Einrichtungen innerhalb des Zeitschlitzes Daten auszugeben haben, und/oder welche Informationen repräsentierende Daten innerhalb des Zeitschlitzes von den anderen Einrichtungen auszugeben sind, und/oder zu welchen Zeitpunkten innerhalb des Zeitschlitzes die anderen Einrichtungen die jeweiligen Daten auszugeben haben,
**dadurch gekennzeichnet,**
**daß** die den Zeitschlitz betreffenden Einstellungen durch zu den betreffenden Einrichtungen (N1-Nn) über den Bus (BUS) übertragene Daten und/oder Anweisungen erfolgt.

3. Verfahren nach Anspruch 1 oder 2,
**dadurch gekennzeichnet,**
**daß** die den Zeitschlitz betreffenden Einstellungen vor dem Beginn der Übertragung der den Zeitschlitz enthaltenden Einheit erfolgen.

4. Verfahren nach einem der vorhergehenden Ansprüche,
**dadurch gekennzeichnet,**
**daß** die den Zeitschlitz betreffenden Einstellungen durch eine oder mehrere der am Bus (BUS) angeschlossenen Einrichtungen (N1-Nn) erfolgen.

5. Verfahren nach einem der vorhergehenden Ansprüche,
**dadurch gekennzeichnet,**
**daß** die den Zeitschlitz betreffenden Einstellungen bei einer Initialisierung der Einrichtungen (N1-Nn) erfolgen.

6. Verfahren nach einem der vorhergehenden Ansprüche,
**dadurch gekennzeichnet,**
**daß** die den Zeitschlitz betreffenden Einstellungen veränderbar sind.

7. Verfahren nach einem der vorhergehenden Ansprüche,
**dadurch gekennzeichnet,**
**daß** die den Zeitschlitz betreffenden Einstellungen in nicht-flüchtigen Speichereinrichtungen gespeichert werden.

8. Verfahren nach einem der vorhergehenden Ansprüche,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, Frames sind.

9. Verfahren nach einem der vorhergehenden Ansprüche,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, Nachrichten sind.

10. Verfahren nach einem der vorhergehenden Ansprüche,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, in einem bestimmten Übertragungstakt jeweils seriell über den Bus (BUS) übertragen werden.

11. Verfahren nach einem der vorhergehenden Ansprüche,
**dadurch gekennzeichnet,**
**daß** es von den in den Einheiten, in welchen die zu übertragenden Daten zusammen mit für die Übertragung und/oder die Verwendung der Daten benötigten oder nützlichen Informationen übertragen werden, enthaltenen Daten und Informationen abhängt, ob und gegebenenfalls welche Einrichtungen (N1-Nn) zu welchem Zeitpunkten welche Informationen auf den Bus (BUS) auszugeben haben.

12. Verfahren nach einem der vorhergehenden Ansprüche,
**dadurch gekennzeichnet,**
**daß** in dem Zeitschlitz ein oder mehrere Bits.über den Bus (BUS) übertragen werden können.

13. Verfahren nach einem der vorhergehenden Ansprüche,
**dadurch gekennzeichnet,**
**daß** die Daten, die während des Zeitschlitzes auf den Bus (BUS) auszugeben sind, ein positives Acknowledge-Bit umfassen, durch welches angezeigt wird, daß die das Acknowledge-Bit auf den Bus ausgebende Einrichtung vorher über den Bus übertragene Daten fehlerfrei empfangen hat.

14. Verfahren nach Anspruch 13,
**dadurch gekennzeichnet,**
**daß** die am Bus (BUS) angeschlossenen Einrichtungen (N1-Nn) so eingestellt sind oder werden, daß ausschließlich Einrichtungen, für die die über den Bus übertragenen Daten bestimmt sind, den fehlerfreien Empfang der Daten durch die Ausgabe eines positiven Acknowledge-Bits auf den Bus quittieren.

15. Verfahren nach Anspruch 13 oder 14,
**dadurch gekennzeichnet,**
**daß** dann, wenn mehrere der am Bus (BUS) angeschlossenen-Einrichtungen (N1-Nn) so eingestellt sind oder werden, daß sie den fehlerfreien Empfang der Daten durch die Ausgabe eines positiven Acknowledge-Bits zu quittieren haben, diese mehreren Einrichtungen so eingestellt sind oder werden, daß sie die gegebenenfalls auszugebenden positiven Acknowledge-Bits zu voneinander verschiedenen Zeitpunkten ausgeben.

16. Verfahren nach Anspruch 14 oder 15,
**dadurch gekennzeichnet,**
**daß** die am Bus (BUS) angeschlossenen Einrichtungen (N1-Nn) so eingestellt sind oder werden, daß die Einrichtungen, für die die über den Bus übertragenen Daten nicht bestimmt sind, zumindest zu den Zeitpunkten, zu denen die Einrichtungen, für die die über den Bus übertragenen Daten bestimmt sind, den fehlerfreien Empfang der Daten zu quittieren haben können, keine Daten auf den Bus ausgeben.

17. Verfahren nach einem der vorhergehenden Ansprüche,
**dadurch gekennzeichnet,**
**daß** die Daten, die während des Zeitschlitzes auf den Bus (BUS) auszugeben sind, ein negatives Acknowledge-Bit umfassen, durch welches angezeigt wird, daß die das negative Acknowledge-Bit auf den Bus ausgebende Einrichtung vorher über den Bus übertragene Daten nicht fehlerfrei empfangen hat.

18. Verfahren nach Anspruch 17,
**dadurch gekennzeichnet,**
**daß** die am Bus (BUS) angeschlossenen Einrichtungen (N1-Nn) so eingestellt sind oder werden, daß ausschließlich Einrichtungen, für die die über den Bus übertragenen Daten bestimmt sind, den nicht fehlerfreien Empfang der Daten durch die Ausgabe eines negativen Acknowledge-Bits auf den Bus melden.

19. Verfahren nach Anspruch 17 oder 18,
**dadurch gekennzeichnet,**
**daß** dann, wenn mehrere der am Bus (BUS) angeschlossenen Einrichtungen (N1-Nn) so eingestellt sind oder werden, daß sie den nicht fehlerfreien Empfang der Daten durch die Ausgabe eines negativen Acknowledge-Bits zu melden haben, diese mehreren Einrichtungen zumindest teilweise so eingestellt sind oder werden, daß sie die gegebenenfalls auszugebenden negativen Acknowledge-Bits zum selben Zeitpunkt ausgeben.

20. Verfahren nach einem der Ansprüche 17 bis 19,
**dadurch gekennzeichnet,**
**daß** die am Bus (BUS) angeschlossenen Einrichtungen (N1-Nn) so eingestellt sind oder werden, daß die Einrichtungen, für die die über den Bus übertragenen Daten nicht bestimmt sind, zumindest zu den Zeitpunkten, zu denen die Einrichtungen, für die die über den Bus übertragenen Daten bestimmt sind, den nicht fehlerfreien Empfang der Daten zu melden haben können, keine Daten auf den Bus ausgeben.

21. Verfahren nach einem der vorhergehenden Ansprüche,
**dadurch gekennzeichnet,**
**daß** die am Bus (BUS) angeschlossenen Einrichtungen (N1-Nn) so eingestellt sind oder werden, daß einzelne, mehrere oder alle am Bus angeschlossenen Einrichtungen zu voneinander verschiedenen Zeitpunkten innerhalb des Zeitschlitzes ein positives Acknowledge-Bit auf den Bus ausgeben, wenn sie die vorher über den Bus übertragene Daten fehlerfrei empfangen haben, oder - jeweils zu voneinander verschiedenen anderen Zeitpunkten innerhalb des Zeitschlitzes - ein negatives Acknowledge-Bit ausgeben, wenn das Gegenteil der Fall ist.

22. Verfahren nach einem der vorhergehenden Ansprüche,
**dadurch gekennzeichnet,**
**daß** die am Bus (BUS) angeschlossenen Einrichtungen (N1-Nn) so eingestellt sind oder werden, daß es vom Inhalt des aktuellen oder eines bestimmten vorhergehenden Frame bzw. vom Inhalt der aktuellen oder einer bestimmten vorhergehenden Nachricht abhängt, welche Einrichtung zu welchem Zeitpunkt welche Information auf den Bus auszugeben hat.

23. Einrichtung (N1-Nn), die über einen Bus (BUS) mit anderen Einrichtungen verbindbar ist, wobei die Einrichtung so aufgebaut ist, daß die Übertragung der zu übertragenden Daten zusammen mit für die Übertragung und/oder die Verwendung der Daten benötigten oder nützlichen Informationen in Einheiten erfolgen kann, die zumindest teilweise wenigstens einen Bereich (REPLY) umfassen, der einen Zeitschlitz definiert, innerhalb dessen die Einrichtung bestimmte Informationen repräsentierende Daten auf den Bus ausgeben kann, und wobei in der Einrichtung eingestellt ist, unter welchen Voraussetzungen sie innerhalb des Zeitschlitzes Daten auszugeben hat, und/oder welche Informationen repräsentierende Daten sie innerhalb des Zeitschlitzes auszugeben hat, und/oder zu welchen Zeitpunkten innerhalb des Zeitschlitzes die Daten auszugeben sind,
**dadurch gekennzeichnet,**
**daß** die Einrichtung so aufgebaut ist, daß die den Zeitschlitz betreffenden Einstellungen durch über den Bus (BUS) zur Einrichtung (N1-Nn) übertragene Daten und/oder Anweisungen erfolgen.

24. Einrichtung (N1-Nn), die über einen Bus (BUS) mit anderen Einrichtungen verbindbar ist,wobei die Einrichtung so aufgebaut ist, daß die Übertragung der zu übertragenden Daten zusammen mit für die Übertragung und/oder die Verwendung der Daten benötigten oder nützlichen Informationen in Einheiten erfolgen kann, die zumindest teilweise wenigstens einen Bereich (REPLY) umfassen, der einen Zeitschlitz definiert, innerhalb dessen eine oder mehrere andere Einrichtungen bestimmte Informationen repräsentierende Daten auf den Bus ausgeben können, und wobei in der Einrichtung eingestellt ist, welche anderen Einrichtungen innerhalb des Zeitschlitzes Daten auszugeben haben, und/oder welche Informationen repräsentierende Daten innerhalb des Zeitschlitzes von den anderen Einrichtungen auszugeben sind, und/oder zu welchen Zeitpunkten innerhalb des Zeitschlitzes die anderen Einrichtungen die jeweiligen Daten auszugeben haben,
**dadurch gekennzeichnet,**
**daß** die Einrichtung so aufgebaut ist, daß die den Zeitschlitz betreffenden Einstellungen durch über den Bus (BUS)zur Einrichtung (N1-Nn) übertragene Daten und/oder Anweisungen erfolgen.

25. Einrichtung nach Anspruch 23 oder 24,
**dadurch gekennzeichnet,**
**daß** die den Zeitschlitz betreffenden Einstellungen vor dem Beginn der Übertragung der den Zeitschlitz enthaltenden Einheit erfolgen.

26. Einrichtung nach einem der Ansprüche 23 bis 25,
**dadurch gekennzeichnet,**
**daß** die den Zeitschlitz betreffenden Einstellungen durch eine oder mehrere der am Bus (BUS) angeschlossenen Einrichtungen (N1-Nn) erfolgen.

27. Einrichtung nach einem der Ansprüche 23 bis 26,
**dadurch gekennzeichnet,**
**daß** die den Zeitschlitz betreffenden Einstellungen bei einer Initialisierung der Einrichtungen (N1-Nn) erfolgen.

28. Einrichtung nach einem der Ansprüche 23 bis 27,
**dadurch gekennzeichnet,**
**daß** die den Zeitschlitz betreffenden Einstellungen veränderbar sind.

29. Einrichtung nach einem der Ansprüche 23 bis 28,
**dadurch gekennzeichnet,**
**daß** die den Zeitschlitz betreffenden Einstellungen in nicht-flüchtigen Speichereinrichtungen gespeichert werden.

30. Einrichtung nach einem der Ansprüche 23 bis 29,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, Frames sind.

31. Einrichtung nach einem der Ansprüche 23 bis 30,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, Nachrichten sind.

32. Einrichtung nach einem der Ansprüche 23 bis 31,
**dadurch gekennzeichnet,**
**daß** die Einheiten, in welchen die zu übertragenden Daten zusammen mit für die Übertragung und/oder die Verwendung der Daten benötigten oder nützlichen Informationen übertragen werden, in einem bestimmten Übertragungstakt jeweils seriell über den Bus (BUS) übertragen werden.

33. Einrichtung nach einem der Ansprüche 23 bis 32,
**dadurch gekennzeichnet,**
**daß** es von den in den Einheiten, in welchen die zu übertragenden Daten zusammen mit für die Übertragung und/oder die Verwendung der Daten benötigten oder nützlichen Informationen übertragen werden, enthaltenen Daten und Informationen abhängt, ob und gegebenenfalls welche Einrichtungen (N1-Nn) zu welchem Zeitpunkten welche Informationen auf den Bus (BUS) auszugeben haben.

34. Einrichtung nach einem der Ansprüche 23 bis 33,
**dadurch gekennzeichnet,**
**daß** in dem Zeitschlitz ein oder mehrere Bits über den Bus (BUS) übertragen werden können.

35. Einrichtung nach einem der Ansprüche 23 bis 34,
**dadurch gekennzeichnet,**
**daß** die Daten, die während des Zeitschlitzes auf den Bus (BUS) auszugeben sind, ein positives Acknowledge-Bit umfassen, durch welches angezeigt wird, daß die das Acknowledge-Bit auf den Bus ausgebende Einrichtung vorher über den Bus übertragene Daten fehlerfrei empfangen hat.

36. Einrichtung nach Anspruch 35,
**dadurch gekennzeichnet,**
**daß** die am Bus (BUS) angeschlossenen Einrichtungen (N1-Nn) so eingestellt sind oder werden, daß ausschließlich Einrichtungen, für die die über den Bus übertragenen Daten bestimmt sind, den fehlerfreien Empfang der Daten durch die Ausgabe eines positiven Acknowledge-Bits auf den Bus quittieren.

37. Einrichtung nach Anspruch 35 oder 36,
**dadurch gekennzeichnet,**
**daß** dann, wenn mehrere der am Bus (BUS) angeschlossenen Einrichtungen (N1-Nn) so eingestellt sind oder werden, daß sie den fehlerfreien Empfang der Daten durch die Ausgabe eines positiven Acknowledge-Bits zu quittieren haben, diese mehreren Einrichtungen so eingestellt sind oder werden, daß sie die gegebenenfalls auszugebenden positiven Acknowledge-Bits zu voneinander verschiedenen Zeitpunkten ausgeben.

38. Einrichtung nach Anspruch 36 oder 37,
**dadurch gekennzeichnet,**
**daß** die am Bus (BUS) angeschlossenen Einrichtungen (N1-Nn) so eingestellt sind oder werden, daß die Einrichtungen, für die die über den Bus übertragenen Daten nicht bestimmt sind, zumindest zu den Zeitpunkten, zu denen die Einrichtungen, für die die über den Bus übertragenen Daten bestimmt sind, den fehlerfreien Empfang der Daten zu quittieren haben können, keine Daten auf den Bus ausgeben.

39. Einrichtung nach einem der Ansprüche 23 bis 38,
**dadurch gekennzeichnet,**
**daß** die Daten, die während des Zeitschlitzes auf den Bus (BUS) auszugeben sind, ein negatives Acknowledge-Bit umfassen, durch welches angezeigt wird, daß die das negative Acknowledge-Bit auf den Bus ausgebende Einrichtung vorher über den Bus übertragene Daten nicht fehlerfrei empfangen hat.

40. Einrichtung nach Anspruch 39,
**dadurch gekennzeichnet,**
**daß** die am Bus (BUS) angeschlossenen Einrichtungen (N1-Nn) so eingestellt sind oder werden, daß ausschließlich Einrichtungen, für die die über den Bus übertragenen Daten bestimmt sind, den nicht fehlerfreien Empfang der Daten durch die Ausgabe eines negativen Acknowledge-Bits auf den Bus melden.

41. Einrichtung nach Anspruch 39 oder 40,
**dadurch gekennzeichnet,**
**daß** dann, wenn mehrere der am Bus (BUS) angeschlossenen Einrichtungen (N1-Nn) so eingestellt sind oder werden, daß sie den nicht fehlerfreien Empfang der Daten durch die Ausgabe eines negativen Acknowledge-Bits zu melden haben, diese mehreren Einrichtungen zumindest teilweise so eingestellt sind oder werden, daß sie die gegebenenfalls auszugebenden negativen Acknowledge-Bits zum selben Zeitpunkt ausgeben.

42. Einrichtung nach einem der Ansprüche 39 bis 41,
**dadurch gekennzeichnet,**
**daß** die am Bus (BUS) angeschlossenen Einrichtungen (N1-Nn) so eingestellt sind oder werden, daß die Einrichtungen, für die die über den Bus übertragenen Daten nicht bestimmt sind, zumindest zu den Zeitpunkten, zu denen die Einrichtungen, für die die über den Bus übertragenen Daten bestimmt sind, den nicht fehlerfreien Empfang der Daten zu melden haben können, keine Daten auf den Bus ausgeben.

43. Einrichtung nach einem der Ansprüche 23 bis 42,
**dadurch gekennzeichnet,**
**daß** die am Bus (BUS) angeschlossenen Einrichtungen (N1-Nn) so eingestellt sind oder werden, daß einzelne, mehrere oder alle am Bus angeschlossenen Einrichtungen zu voneinander verschiedenen Zeitpunkten innerhalb des Zeitschlitzes ein positives Acknowledge-Bit auf den Bus ausgeben, wenn sie die vorher über den Bus übertragene Daten fehlerfrei empfangen haben, oder - jeweils zu voneinander verschiedenen anderen Zeitpunkten innerhalb des Zeitschlitzes - ein negatives Acknowledge-Bit ausgeben, wenn das Gegenteil der Fall ist.

44. Einrichtung nach einem der Ansprüche 23 bis 43,
**dadurch gekennzeichnet,**
**daß** die am Bus (BUS) angeschlossenen Einrichtungen (N1-Nn) so eingestellt sind oder werden, daß es vom Inhalt des aktuellen oder eines bestimmten vorhergehenden Frame bzw. vom Inhalt der aktuellen oder einer bestimmten vorhergehenden Nachricht abhängt, welche Einrichtung zu welchem Zeitpunkt welche Information auf den Bus auszugeben hat.

## Claims

1. Method for transmitting data between devices (Nl-Nn) which are connected via a bus (BUS), wherein the data to be transmitted from a first device to one or more second devices is transmitted, together with information which is required or useful for the transmission and/or the use of the data, into units, at least some of which comprise at least one region (REPLY) which defines a time slot within which the devices transmitting no data can output onto the bus data representing specific information, and wherein, in the devices which must be able to output data within said time slot, settings are made to determine under which conditions data is to be output within the time slot, and/or which data representing information is to be output within the time slot, and/or at which points in time within the time slot the data is to be output,
**characterized in that** the settings relating to the time slot are made by means of data and/or instructions transmitted to the respective devices (Nl-Nn) via the bus (BUS).

2. Method for transmitting data between devices (Nl-Nn) which are connected by a bus (BUS), wherein the data to be transmitted from a first device to one or more second devices is transmitted, together with information which is required or useful for the transmission and/or the use of the data, into units, at least some of which comprise at least one region (REPLY) which defines a time slot within which the devices transmitting no data can output onto the bus data representing specific information, and wherein settings are made, at least in specific devices, to determine which other devices have to output data within the time slot, and/or which data representing information is to be output within the time slot by the other devices, and/or at which points in time within the time slot the other devices have to output the respective data,
wherein the settings relating to the time slot are made by means of data and/or instructions transmitted to the respective devices (Nl-Nn) via the bus (BUS).

3. Method according to Claim 1 or 2, **characterized in that** the settings relating to the time slot are made before the start of the transmission of the unit containing the time slot.

4. Method according to one of the preceding claims,
**characterized in that** the settings relating to the time slot are made by one or more of the devices (Nl-Nn) which are connected to the bus (BUS).

5. Method according to one of the preceding claims,
**characterized in that** the settings relating to the time slot are made when the devices (Nl-Nn) are initialized.

6. Method according to one of the preceding claims,
**characterized in that** the settings relating to the time slot are variable.

7. Method according to one of the preceding claims,
**characterized in that** the settings relating to the time slot are stored in nonvolatile storage devices.

8. Method according to one of the preceding claims,
**characterized in that** the units in which the data to be transmitted is transmitted together with information which is required or useful for the transmission and/or the use of the data are frames.

9. Method according to one of the preceding claims,
**characterized in that** the units in which the data to be transmitted is transmitted together with the information which is required or useful for the transmission and/or the use of the data are messages.

10. Method according to one of the preceding claims,
**characterized in that** the units in which the data to be transmitted is transmitted together with the information which is required or useful for the transmission and/or the use of the data is transmitted in each case serially via the bus (BUS) at a specific transmission clock rate.

11. Method according to one of the preceding claims,
**characterized in that** the data and information contained in the units in which the data to be transmitted is transmitted together with information which is required or useful for the transmission and/or the use of the data determine whether devices (Nl-Nn), and if appropriate which devices (Nl-Nn), have to output which information onto the bus (BUS) at which points in time.

12. Method according to one of the preceding claims,
**characterized in that** one or more bits can be transmitted in the time slot via the bus (BUS).

13. Method according to one of the preceding claims,
**characterized in that** the data to be output onto the bus (BUS) during the time slot comprises a positive acknowledge bit which indicates that the device outputting the acknowledge bit onto the bus has previously received in a fault-free condition data transmitted via the bus.

14. Method according to Claim 13, **characterized in that** the devices (Nl-Nn) which are connected to the bus (BUS) are set in such a way that exclusively devices for which the data transmitted via the bus are intended acknowledge the fault-free reception of the data by outputting a positive acknowledge bit onto the bus.

15. Method according to Claim 13 or 14, **characterized in that** if a plurality of the devices (Nl-Nn) which are connected to the bus (BUS) are set in such a way that they have to acknowledge the fault-free reception of the data by outputting a positive acknowledge bit, this plurality of devices is set in such a way that the positive acknowledge bits which are to be output if appropriate are output by said plurality of devices at different points in time.

16. Method according to Claim 14 or 15, **characterized in that** the devices (Nl-Nn) which are connected to the bus (BUS) are set in such a way that the devices for which the data which is transmitted via the bus is not intended do not output any data onto the bus at least at the points in time at which the devices for which the data which is transmitted via the bus is intended must be able to acknowledge the fault-free reception of the data.

17. Method according to one of the preceding claims,
**characterized in that** the data to be output onto the bus (BUS) during the time slot comprises a negative acknowledge bit which indicates that the device outputting the negative acknowledge bit onto the bus has previously not received in a fault-free condition data transmitted via the bus.

18. Method according to Claim 17, **characterized in that** the devices (Nl-Nn) which are connected to the bus (BUS) are set in such a way that exclusively devices for which the data which is transmitted via the bus is intended signal the non-fault-free reception of the data by outputting a negative acknowledge bit onto the bus.

19. Method according to Claim 17 or 18, **characterized in that** if a plurality of the devices (Nl-Nn) which are connected to the bus (BUS) are set in such a way that they have to signal the non-fault-free reception of the data by outputting a negative acknowledge bit, at least some of this plurality of devices are set in such a way that they output at the same time the negative acknowledge bits which are to be output if appropriate.

20. Method according to one of Claims 17 to 19,
**characterized in that** the devices (Nl-Nn) which are connected to the bus (BUS) are set in such a way that the devices for which the data transmitted via the bus is not intended do not output any data onto the bus at least at the points in time at which the devices for which the data transmitted via the bus is intended must be able to signal the non-fault-free reception of the data.

21. Method according to one of the preceding claims,
**characterized in that** the devices (Nl-Nn) which are connected to the bus (BUS) are set in such a way that individual devices, a plurality of devices, or all the devices which are connected to the bus output a positive acknowledge bit onto the bus at different points in time within the time slot if said devices have received in a fault-free condition data previously transmitted via the bus, or they output a negative acknowledge bit if the opposite is the case, in each case at other, different points in time within the time slot.

22. Method according to one of the preceding claims,
**characterized in that** the devices (Nl-Nn) which are connected to the bus (BUS) are set in such a way that the content of the current frame or of a specific preceding frame or the content of the current message or of a specific preceding message determines which devices has to output which information onto the bus at which point in time.

23. Device (Nl-Nn) which can be connected to other devices via a bus (BUS), wherein the device is designed in such a way that the data to be transmitted can be transmitted, together with information which is required or useful for the transmission and/or the use of the data, into units, at least some of which comprise at least one region (REPLY) which defines a time slot within which the device can output onto the bus data representing specific information, and wherein settings are made in the device to determine under which conditions it has to output data within the time slot and/or which data representing information it has to output within the time slot and/or at which points in time within the time slot the data is to be output,
**characterized in that** the device is designed in such a way that the settings relating to the time slot are made by means of data and/or instructions transmitted via the bus (BUS) to the device (Nl-Nn).

24. Device (Nl-Nn) which can be connected to other devices via a bus (BUS), wherein the device is designed in such a way that the data to be transmitted can be transmitted, together with information which is required or useful for the transmission and/or the use of the data, into units, at least some of which comprise at least one region (REPLY) which defines a time slot within which one or a plurality of other devices can output onto the bus data representing specific information, and wherein settings are made in the device to determine which other devices have to output data within the time slot, and/or which data representing information has to be output within the time slot by the other devices and/or at which points in time within the time slot the other devices have to output the respective data, **characterized in that** the device is designed in such a way that the settings relating to the time slot are made by means of data and/or instructions transmitted via the bus (BUS) to the device (Nl-Nn).

25. Device according to Claim 23 or 24, **characterized in that** the settings relating to the time slot are made before the start of the transmission of the unit containing the time slot.

26. Device according to one of Claims 23 to 25,
**characterized in that** the settings relating to the time slot are made by one or more of the devices (Nl-Nn) which are connected to the bus (BUS).

27. Device according to one of Claims 23 to 26,
**characterized in that** the settings relating to the time slot are made when the devices (Nl-Nn) are initialized.

28. Device according to one of Claims 23 to 27,
**characterized in that** the settings relating to the time slot are variable.

29. Device according to one of Claims 23 to 28,
**characterized in that** the settings relating to the time slot are stored in nonvolatile storage devices.

30. Device according to one of Claims 23 to 29,
**characterized in that** the units in which the data to be transmitted is transmitted together with information which is required or useful for the transmission and/or the use of the data are frames.

31. Device according to one of Claims 23 to 30,
**characterized in that** the units in which the data to be transmitted is transmitted together with the information which is required or useful for the transmission and/or the use of the data are messages.

32. Device according to one of Claims 23 to 31,
**characterized in that** the units in which the data to be transmitted is transmitted together with the information which is required or useful for the transmission and/or the use of the data is transmitted in each case serially via the bus (BUS) at a specific transmission clock rate.

33. Device according to one of Claims 23 to 32,
**characterized in that** the data and information contained in the units in which the data to be transmitted is transmitted together with information which is required or useful for the transmission and/or the use of the data determine whether devices (Nl-Nn), and if appropriate which devices (Nl-Nn), have to output which information onto the bus (BUS) at which points in time.

34. Device according to one of Claims 23 to 33,
**characterized in that** one or more bits can be transmitted in the time slot via the bus (BUS).

35. Device according to one of Claims 23 to 34,
**characterized in that** the data to be output onto the bus (BUS) during the time slot comprises a positive acknowledge bit which indicates that the device outputting the acknowledge bit onto the bus has previously received in a fault-free condition data transmitted via the bus.

36. Device according to Claim 35, **characterized in that** the devices (Nl-Nn) which are connected to the bus (BUS) are set in such a way that exclusively devices for which the data transmitted via the bus are intended acknowledge the fault-free reception of the data by outputting a positive acknowledge bit onto the bus.

37. Device according to Claim 35 or 36, **characterized in that** if a plurality of the devices (Nl-Nn) which are connected to the bus (BUS) are set in such a way that they have to acknowledge the fault-free reception of the data by outputting a positive acknowledge bit, this plurality of devices is set in such a way that the positive acknowledge bits which are to be output if appropriate are output by said plurality of devices at different points in time.

38. Device according to Claim 36 or 37, **characterized in that** the devices (Nl-Nn) which are connected to the bus (BUS) are set in such a way that the devices for which the data which is transmitted via the bus is not intended do not output any data onto the bus at least at the points in time at which the devices for which the data which is transmitted via the bus is intended must be able to acknowledge the fault-free reception of the data.

39. Device according to one of Claims 23 to 38,
**characterized in that** the data to be output onto the bus (BUS) during the time slot comprises a negative acknowledge bit which indicates that the device outputting the negative acknowledge bit onto the bus has previously not received in a fault-free condition data transmitted via the bus.

40. Device according to Claim 39, wherein the devices (Nl-Nn) which are connected to the bus (BUS) are set in such a way that exclusively devices for which the data which is transmitted via the bus is intended signal the non-fault-free reception of the data by outputting a negative acknowledge bit onto the bus.

41. Device according to Claim 39 or 40, **characterized in that** if a plurality of the devices (Nl-Nn) which are connected to the bus (BUS) are set in such a way that they have to signal the non-fault-free reception of the data by outputting a negative acknowledge bit, at least some of this plurality of devices are set in such a way that they output at the same time the negative acknowledge bits which are to be output if appropriate.

42. Device according to one of Claims 39 to 41,
**characterized in that** the devices (Nl-Nn) which are connected to the bus (BUS) are set in such a way that the devices for which the data transmitted via the bus is not intended do not output any data onto the bus at least at the points in time at which the devices for which the data transmitted via the bus is intended must be able to signal the non-fault-free reception of the data.

43. Device according to one of Claims 23 to 42,
**characterized in that** the devices (Nl-Nn) which are connected to the bus (BUS) are set in such a way that individual devices, a plurality of devices, or all the devices which are connected to the bus output a positive acknowledge bit onto the bus at different points in time within the time slot if said devices have received in a fault-free condition data previously transmitted via the bus, or they output a negative acknowledge bit if the opposite is the case, in each case at other, different points in time within the time slot.

44. Device according to one of Claims 23 to 43,
**characterized in that** the devices (Nl-Nn) which are connected to the bus (BUS) are set in such a way that the content of the current frame or of a specific preceding frame or the content of the current message or of a specific preceding message determines which devices has to output which information onto the bus at which point in time.

## Revendications

1. Procédé de transmission de données entre des installations (N1-Nn) via un bus (BUS), les données devant être transmises d'une première installation vers une ou plusieurs deuxièmes installations étant transmises en commun avec des informations nécessaires ou utiles pour la transmission et/ou l'utilisation des données dans des unités, comprenant au moins partiellement une zone (REPLY) définissant un créneau temporel, dans lequel les installations ne transmettant aucune donnée peuvent délivrer sur le bus des données représentant des informations déterminées et, dans les installations qui, dans le créneau temporel cité, ont pu délivrer des données, on règle les conditions sous lesquelles des données doivent être éditées dans le créneau temporel et/ou quelles sont les données représentant des informations qui doivent être éditées dans le créneau temporel et/ou à quels moments les données doivent être éditées dans le créneau temporel,
**caractérisé en ce que**
les réglages concernant le créneau temporel sont effectués par des données et/ou des instructions transmises vers les installations concernées (N1-Nn) via le bus (BUS).

2. Procédé de transmission de données entre des installations (N1-Nn) via un bus (BUS), les données devant être transmises d'une première installation vers une ou plusieurs deuxièmes installations étant transmises en commun avec des informations nécessaires ou utiles pour la transmission et/ou l'utilisation des données dans des unités, comprenant au moins partiellement une zone (REPLY) définissant un créneau temporel, dans lequel les installations ne transmettant aucune donnée peuvent délivrer sur le bus des données représentant des informations déterminées et, dans au moins certaines installations, on règle quelles sont les autres installations qui doivent délivrer des données dans le créneau temporel et/ou quelles sont les données représentant des informations qui doivent être délivrées dans le créneau temporel par les autres installations, et/ou à quels moments dans le créneau temporel les autres installations doivent délivrer les données respectives,
**caractérisé en ce que**
les réglages concernant le créneau temporel sont effectués par des données et/ou des instructions transmises vers les installations concernées (N1-Nn) via le bus (BUS).

3. Procédé selon la revendication 1 ou 2,
**caractérisé en ce que**
les réglages concernant le créneau temporel sont effectués avec le début de la transmission de l'unité contenant le créneau temporel.

4. Procédé selon l'une quelconque des revendications précédentes,
**caractérisé en ce que**
les réglages concernant le créneau temporel sont effectués par une ou par plusieurs des installations (N1-Nn) raccordées sur le bus (BUS).

5. Procédé selon l'une quelconque des revendications précédentes,
**caractérisé en ce que**
les réglages concernant le créneau temporel sont effectués lors d'une initialisation des installations (N1-Nn).

6. Procédé selon l'une quelconque des revendications précédentes,
**caractérisé en ce que**
les réglages concernant le créneau temporel sont modifiables.

7. Procédé selon l'une quelconque des revendications précédentes,
**caractérisé en ce que**
les réglages concernant le créneau temporel sont sauvegardés dans une mémoire non volatile.

8. Procédé selon l'une quelconque des revendications précédentes,
**caractérisé en ce que**
les unités dans lesquelles les données à transférer sont transmises avec des informations nécessaires ou utiles pour la transmission et/ou l'utilisation des données sont des unités d'informations.

9. Procédé selon l'une quelconque des revendications précédentes,
**caractérisé en ce que**
les unités dans lesquelles les données à transférer sont transmises avec des informations nécessaires ou utiles pour la transmission et/ou l'utilisation des données sont des messages.

10. Procédé selon l'une quelconque des revendications précédentes,
**caractérisé en ce que**
les unités dans lesquelles les données à transférer sont transmises avec des informations nécessaires ou utiles pour la transmission et/ou l'utilisation des données sont transférées à une cadence de transmission déterminée, chaque fois en série via le bus (BUS).

11. Procédé selon l'une quelconque des revendications précédentes,
**caractérisé en ce**
**qu'**il dépend des données et informations contenues dans les unités, dans lesquelles les informations nécessaires ou utiles pour la transmission et/ou l'utilisation des données si, et le cas échéant quelles sont, les installations (N1-Nn) qui doivent délivrer sur le bus (BUS) quelles informations et à quel moment.

12. Procédé selon l'une quelconque des revendications précédentes,
**caractérisé en ce que**
dans le créneau temporel, un ou plusieurs bits peuvent être transmis via le bus (BUS).

13. Procédé selon l'une quelconque des revendications précédentes,
**caractérisé en ce que**
les données qui doivent être délivrées sur le bus (BUS) pendant le créneau temporel comportent un bit de reconnaissance positif qui indique que l'installation qui délivre le bus de reconnaissance sur le bus a réceptionné précédemment des données sans erreur transmises via le bus.

14. Procédé selon la revendication 13,
**caractérisé en ce que** ,
les installations (N1-Nn) raccordées sur le bus (BUS) sont ou vont être réglées de façon telle que seulement des installations auxquelles les données transmises via le bus sont destinées acquittent la réception sans erreur des données par la délivrance d'un bit de reconnaissance sur le bus.

15. Procédé selon la revendication 13 ou 14,
**caractérisé en ce que**
si plusieurs des installations (N1-Nn) raccordées sur le bus (BUS) sont ou vont être réglées de façon telle qu'elles doivent acquitter la réception sans erreur des données par la délivrance d'un bus de reconnaissance positif, lesdites plusieurs installations sont ou vont être réglées de façon à délivrer les bits de reconnaissance positifs qu'elles doivent délivrer le cas échéant à des moments différents les uns des autres.

16. Procédé selon la revendication 14 ou 15,
**caractérisé en ce que**
les installations (Nl-Nn) raccordées sur le bus (BUS) sont ou vont être réglées de façon telle que les installations auxquelles les données transmises via le bus ne sont pas destinées ne délivrent aucune donnée sur le bus, au moins au moment auquel les installations auxquelles les données transmises via le bus sont destinées doivent acquitter la réception sans erreur des données.

17. Procédé selon l'une quelconque des revendications précédentes,
**caractérisé en ce que**
les données qui doivent être délivrées sur le bus (BUS) pendant le créneau temporel comportent un bit de reconnaissance négatif qui indique que l'installation qui délivre le bus de reconnaissance négatif sur le bus n'a pas réceptionné précédemment sans erreur des données transmises via le bus.

18. Procédé selon la revendication 17,
**caractérisé en ce que**
les installations (N1-Nn) raccordées sur le bus (BUS) sont ou vont être réglées de façon telle que seulement des installations auxquelles les données transmises via le bus sont destinées signalent la réception non exempte d'erreurs des données par la délivrance d'un bit de reconnaissance négatif sur le bus.

19. Procédé selon la revendication 17 ou 18,
**caractérisé en ce que**
si plusieurs des installations (N1-Nn) raccordées sur le bus (BUS) sont ou vont être réglées de façon telle qu'elles doivent signaler la réception non exempte d'erreur des données par la délivrance d'un bus de reconnaissance négatif, lesdites plusieurs installations sont ou vont être réglées de façon à délivrer au même moment les bits de reconnaissance négatifs qu'elles doivent délivrer le cas échéant.

20. Procédé selon l'une quelconque des revendications 17 à 19,
**caractérisé en ce que**
les installations (N1-Nn) raccordées sur le bus (BUS) sont ou vont être réglées de façon telle que les installations auxquelles les données transmises via le bus ne sont pas destinées ne délivrent aucune donnée sur le bus, au moins au moment auquel les installations auxquelles les données transmises via le bus sont destinées doivent signaler la réception non exempte d'erreur des données.

21. Procédé selon l'une quelconque des revendications précédentes,
**caractérisé en ce que**
les installations (N1-Nn) raccordées sur le bus (BUS) sont ou vont être réglées de façon telle que des installations individuelles, plusieurs installations ou toutes les installations raccordées sur le bus délivrent à des moments différents les uns des autres dans le créneau temporel un bus de reconnaissance positif sur le bus, si elles ont réceptionné sans erreur les données transmises précédemment sur le bus, ou délivrent (à des moments chaque fois différents les uns des autres dans le créneau temporel) un bus de reconnaissance négatif dans le cas contraire.

22. Procédé selon l'une quelconque des revendications précédentes,
**caractérisé en ce que**
les installations (N1-Nn) raccordées sur le bus (BUS) sont ou vont être réglées de façon telle qu'il dépend du contenu de l'unité d'information actuelle ou d'une unité d'information précédente déterminée quelle est l'installation qui doit délivrer quelle information à quel moment sur le bus.

23. Installation (N1-Nn) qui peut être reliée via un bus (BUS) avec d'autres installations, l'installation étant constituée de façon telle que la transmission des données devant être transmises en commun avec des informations nécessaires ou utiles pour la transmission et/ou l'utilisation des données peut être assurée dans des unités, comprenant au moins partiellement une zone (REPLY) définissant un créneau temporel, dans laquelle l'installation peut délivrer sur le bus des données représentant des informations déterminées et on règle dans l'installation les conditions sous lesquelles elle doit délivrer des données dans le créneau temporel et/ou quelles sont les données représentant des informations qu'elle doit délivrer dans le créneau temporel et/ou à quels moments les données doivent être délivrées dans le créneau temporel,
**caractérisée en ce que**
l'installation est constituée de façon telle que les réglages concernant le créneau temporel sont effectués par des données et/ou des instructions transmises via le bus (BUS) à l'installation (N1-Nn).

24. Installation (N1- Nn) qui peut être reliée via un bus (BUS) avec d'autres installations, l'installation étant constituée de façon telle que la transmission des données devant être transmises en commun avec des informations nécessaires ou utiles pour la transmission et/ou l'utilisation des données peut être assurée dans des unités, comprenant au moins partiellement une zone (REPLY) définissant un créneau temporel, dans laquelle une ou plusieurs autres installations peuvent délivrer sur le bus des données représentant des informations déterminées et on règle dans l'installation quelles sont les autres installations qui doivent délivrer des données dans le créneau temporel et/ou quelles sont les données représentant des informations que les autres installations doivent délivrer dans le créneau temporel et/ou à quels moments dans le créneau temporel les autres installations doivent délivrer les données respectives,
**caractérisée en ce que**
l'installation est constituée de façon telle que les réglages concernant le créneau temporel sont effectués par des données et/ou des instructions transmises via le bus (BUS) à l'installation (N1-Nn).

25. Installation selon la revendication 23 ou 24,
**caractérisée en ce que**
les réglages concernant le créneau temporel sont effectués avec le début de la transmission de l'unité contenant le créneau temporel.

26. Installation selon l'une quelconque des revendications 23 à 25,
**caractérisée en ce que**,
les réglages concernant le créneau temporel sont effectués par une ou par plusieurs des installations (N1-Nn) raccordées sur le bus (BUS).

27. Installation selon l'une quelconque des revendications 23 à 26,
**caractérisée en ce que**
les réglages concernant le créneau temporel sont effectués lors d'une initialisation des installations (N1-Nn).

28. Installation selon l'une quelconque des revendications 23 à 27,
**caractérisée en ce que**
les réglages concernant le créneau temporel sont modifiables.

29. Installation selon l'une quelconque des revendications 23 à 28,
**caractérisée en ce que**
les réglages concernant le créneau temporel sont sauvegardés dans des dispositifs de mémoire non volatile.

30. Installation selon l'une quelconque des revendications 23 à 29,
**caractérisée en ce que**
les unités dans lesquelles les données à transférer sont transmises avec des informations nécessaires ou utiles pour la transmission et/ou l'utilisation des données sont des unités d'informations.

31. Installation selon l'une quelconque des revendications 23 à 30,
**caractérisée en ce que**
les unités dans lesquelles les données à transférer sont transmises avec des informations nécessaires ou utiles pour la transmission et/ou l'utilisation des données sont des messages.

32. Installation selon l'une quelconque des revendications 23 à 31,
**caractérisée en ce que**
les unités dans lesquelles les données à transférer sont transmises avec des informations nécessaires ou utiles pour la transmission et/ou l'utilisation des données sont transférées à une cadence de transmission déterminée, chaque fois en série via le bus (BUS).

33. Installation selon l'une quelconque des revendications 23 à 32,
**caractérisée en ce**
**qu'**il dépend des données et informations contenues dans les unités, dans lesquelles les informations nécessaires ou utiles pour la transmission et/ou l'utilisation des données sont transmises si, et le cas échéant quelles sont, les installations (N1-Nn) qui doivent délivrer sur le bus (BUS) quelles informations et à quel moment.

34. Installation selon l'une quelconque des revendications 23 à 33,
**caractérisée en ce que**
dans le créneau temporel, un ou plusieurs bits peuvent être transmis via le bus (BUS).

35. Installation selon l'une quelconque des revendications 23 à 34,
**caractérisée en ce que**
les données qui doivent être délivrées sur le bus (BUS) pendant le créneau temporel comportent un bit de reconnaissance positif qui indique que l'installation qui délivre le bus de reconnaissance sur le bus a réceptionné précédemment sans erreur des données transmises via le bus.

36. Installation selon la revendication 35,
**caractérisée en ce que**
les installations (N1-Nn) raccordées sur le bus (BUS) sont ou vont être réglées de façon telle que seulement des installations auxquelles les données transmises via le bus sont destinées acquittent la réception sans erreur des données par la délivrance d'un bit de reconnaissance positif sur le bus.

37. Installation selon la revendication 35 ou 36,
**caractérisée en ce que**
si plusieurs des installations (N1-Nn) raccordées sur le bus (BUS) sont ou vont être réglées de façon telle qu'elles doivent acquitter la réception sans erreur des données par la délivrance d'un bus de reconnaissance positif, lesdites plusieurs installations sont ou vont être réglées de façon à délivrer les bits de reconnaissance positifs qu'elles doivent délivrer le cas échéant à des moments différents les uns des autres.

38. Installation selon la revendication 36 ou 37,
**caractérisée en ce que**
les installations (N1-Nn) raccordées sur le bus (BUS) sont ou vont être réglées de façon telle que les installations auxquelles les données transmises via le bus ne sont pas destinées ne délivrent aucune donnée sur le bus, au moins au moment auquel les installations auxquelles les données transmises via le bus sont destinées doivent acquitter la réception sans erreur des données.

39. Installation selon l'une quelconque des revendications 23 à 38,
**caractérisée en ce que**
les données qui doivent être délivrées sur le bus (BUS) pendant le créneau temporel comportent un bit de reconnaissance négatif qui indique que l'installation qui délivre le bit de reconnaissance négatif sur le bus n'a pas réceptionné précédemment sans erreur des données transmises via le bus.

40. Installation selon la revendication 39,
**caractérisée en ce que**
les installations (N1-Nn) raccordées sur le bus (BUS) sont ou vont être réglées de façon telle que seulement des installations auxquelles les données transmises via le bus sont destinées signalent la réception non exempte d'erreurs des données par la délivrance d'un bit de reconnaissance négatif sur le bus.

41. Installation selon la revendication 39 ou 40,
**caractérisée en ce que**
si plusieurs des installations (N1-Nn) raccordées sur le bus (BUS) sont ou vont être réglées de façon telle qu'elles doivent signaler la réception non exempte d'erreur des données par la délivrance d'un bus de reconnaissance négatif, lesdites plusieurs installations sont ou vont être réglées au moins partiellement de façon à délivrer au même moment les bits de reconnaissance négatifs qu'elles doivent délivrer le cas échéant.

42. Installation selon l'une quelconque des revendications 39 à 41,
**caractérisée en ce que**
les installations (N1-Nn) raccordées sur le bus (BUS) sont ou vont être réglées de façon telle que les installations auxquelles les données transmises via le bus ne sont pas destinées ne délivrent aucune donnée sur le bus, au moins aux moments auxquels les installations auxquelles les données transmises via le bus sont destinées doivent signaler la réception non exempte d'erreur des données.

43. Installation selon l'une quelconque des revendications 23 à 42,
**caractérisée en ce que**
les installations (Nl-Nn) raccordées sur le bus (BUS) sont ou vont être réglées de façon telle que des installations individuelles, plusieurs installations ou toutes les installations raccordées sur le bus délivrent dans le créneau temporel un bit de reconnaissance positif sur le bus si elles ont réceptionné sans erreur les données transmises précédemment via le bus ou (respectivement à des moments différents les uns des autres) délivrent un bit de reconnaissance négatif dans le cas contraire.

44. Installation selon l'une quelconque des revendications 23 à 43,
**caractérisée en ce que**
les installations (N1-Nn) raccordées sur le bus (BUS) sont ou vont être réglées de façon telle qu'il dépend du contenu de l'unité d'information actuelle ou d'une unité d'information précédente déterminée quelle est l'installation qui doit délivrer quelle information à quel moment sur le bus.
